Europäisches Patentamt

European Patent Office

Office européen des brevets

(19)

(11) Publication number: **0 076 646**
**B1**

(12) **EUROPEAN PATENT SPECIFICATION**

(45) Date of publication of patent specification: **09.04.86**

(51) Int. Cl.⁴: **H 04 Q 3/72, H 04 M 1/57**

(21) Application number: **82305185.9**

(22) Date of filing: **30.09.82**

(54) Calling line tracing system and identification detector.

(30) Priority: **02.10.81 BR 8106464**
**08.01.82 ES 508596**

(43) Date of publication of application:
**13.04.83 Bulletin 83/15**

(45) Publication of the grant of the patent:
**09.04.86 Bulletin 86/15**

(84) Designated Contracting States:
**AT BE CH DE FR GB IT LI LU NL SE**

(56) References cited:
**DE-A-2 714 401**
**FR-A-1 514 198**
**FR-A-2 183 442**
**FR-A-2 379 951**

(73) Proprietor: **SONINTEL SOCIEDADE NACIONAL
DE INDUSTRIA DE TELECOMUNICACOES LTDA.
Ed. Venancio 2000 Térreo Bloco 50 Loja 40-D
Brasilia (BR)**

(72) Inventor: **Pintos, José Pereira
Shogn - Q - 706 Bloco "J" - Casa 39
Brasilia - D.F. (BR)**
Inventor: **Catoira, José Daniel Martin
SQN 104 Bloco "J" Apartamento 505
Brasilia - D.F. (BR)**
Inventor: **Da Costa Ribeiro Neto, Affonso Feijo
SQN 307 Bloco "I" - Apartamento 609
Brasilia - D.F. (BR)**

(74) Representative: **Lightfoot, Robert Oscar et al
Raworth, Moss & Cook 36 Sydenham Road
Croydon Surrey, CR0 2EF (GB)**

The file contains technical information
submitted after the application was filed and
not included in this specification

Courier Press, Leamington Spa, England.

## Description

This invention relates to telephone networks or systems and concerns a system suitable for the immediate identification of the identity number of a calling station A on a called station B which may be connected through any number of intermediate automatic exchanges in a telephone network within a country or political area and even on a worldwide basis if the necessary agreements between countries have been previously made.

Ever since the introduction of automatic telephone exchanges, there have been repeated attempts to find a simple and fast method, enabling one to detect the identity number of a calling station A at a remotely located called station B, the objective being to eliminate, or at least reduce, the possibility of malicious anonymous calls, which sometimes, as in the case of bomb threats or other terrorist activities, is not only desirable but a real need.

The present invention covers and claims improvements made by the corporation, which have allowed it to develop a complete system and complementary hardware, applicable to any kind of exchange, not limited to any particular type, and in any number, and which includes the necessary programming or software, as well as the basic characteristics of the essential circuit blocks of the complementary hardware. The result is a call tracing system and identification detector which can immediately indicate, upon receiving a telephone call at a called station, not only the identification number of the caller but also the type of subscriber, for example, regular, public telephone or other (given by the category) and the location of the calling station, given by the area code or the country code in the case of international calls.

Many prior art arrangements have been proposed to identify calling stations connected with called stations and attendant positions through automatic exchanges. These systems are based on several different principles and generally they are only applicable to special cases, as they introduce additional complications in the network and the expense is such that it hardly allows the development of a product within the reach of the ordinary telephone subscriber. Usually, they are based on one or more of the following methods:—

— Introduction of strange additional signalling in the telephone network.

— Operation of a switch or electrical connection to start the identification process.

— Use of alternative routes to trace the calling station.

— Use of additional devices at the local exchange, which very often is not possible for the simple reason of the space available, independently of the costs that might be incurred.

— Usually, they entail a risk of interference with the regular telephone exchange control signalling.

As a general rule, an ideal system for identifying calling stations should have the following characteristics:—

It should not require any modifications at the calling station.

— It should not be detectable by the calling party to avoid alerting it that it is being identified.

— It should allow immediate identification of the calling station by the single fact of receiving a call at the called station, without even lifting the receiver.

— It should not introduce any strange signalling in the telephone network, that is, it should not use any other signalling than that of the telephone network itself, to avoid any possibility of interfering with its regular operation.

— It should not require the installatin of any additional devices in the switching exchanges of the telephone system.

— The hardware to be used at the called station should occupy minimum space and even offer the possibility of being incorporated in the subscriber set as an integral part of it.

— It should allow the development of a type of hardware which requires the previous knowledge of the subscriber for it to be installed, in order to comply with any existing regulations on the Right of Privacy.

— As a complement to the previous condition, if connected without the knowledge of the private subscriber it should not operate nor interfere with the operation of the telephone network.

— It should not be possible to install it without the co-operation and knowledge of the telephone operating company, to ensure not only full compatibility with the regular operation of the network but also as an additional guarantee for private subscribers.

— It should allow commercial production at a sufficiently low price for it to be within the reach of any subscriber and not only of official institutions or major corporations.

This invention seeks to provide a system which for the first time fulfils some or all of these conditions.

In FR—A—1514198 there is disclosed a telephone system including means for identifying a calling station to be connected by way of a telephone exchange to a called station provided with an identification detector device, the exchange being arranged to recognise a station provided with such a device and on receipt of a call for such a station to send a signal to the exchange where the call originated requesting through the detector device identification information of the calling station and then to transfer control of the call to the identification detector device, the detector device being arranged to receive the identification information and to control thereby the completion of the call from the calling station to the called station.

In the present invention, however, the identification detector device is located at the called station and it is the exchange and not the detector which sends out the request for the identification signal.

In accordance with the present invention the telephone network system comprising a plurality of telephone exchanges is characterised in that the set of telephone switching exchanges of the network has been specially programmed to have:

means for disengaging the control unit of the end telephone exchange of the called party upon receiving a call addressed to a called line designated with a special category or shunt and returning a signal requesting identification of the calling station instead of a signal indicating that the called line has been localised and changing to a code containing information about the state of the line reached,

means for stopping or cancelling the sending of calling tone for the caller and called signal or current for the called party,

means for transferring the control of the calling process from the control unit of the end telephone exchange to the identification detector, which takes over the control of the calling process until the identification of the calling party is received and the call is completed, and

means whereby if the exchange of origin where the calling station is connected cannot send the identification of the calling line in response to the identification request signals of the detector, the corresponding tandem exchange has been specially arranged to send instead a repeated code figure which can be accepted by the detector as identification of the calling station, allowing the completion of the call, or alternatively,

means whereby if the exchange of origin where the calling station is connected sends a signal that the calling part is unidentified the detector, upon receiving this signal, is internally programmed to complete the call, showing in the display or storing in its memory a predetermined number as identification of the calling party, without any special arrangement in the intervening tandem exchanges, if existing, allowing it to complete the call.

The system is composed basically of a subscriber terminal or called station designated with a special category or shunt at its local exchange, an identification detector connected to the subscriber line and a network of telephone exchanges specially programmed to send the identification of the calling station to the detector if, and only if, the addressed called station has been designated with a special category or shunt, in such a way that a clandestine installation of a detector will not only not operate, but will not affect in any way the telephone line or the telephone network in general.

The identification detector where the identity of the calling station is received is composed of a series of circuits or basic blocks described below, plus a set of auxiliary interconnecting circuits which are not relevant for the purpose of the present description. These basic blocks are:—

— A sensing circuit which detects the position of the receiver of the called station, that is hung up or in use.

— A receiver and selector circuit tuned to the telephone exchange control operating frequencies.

— A decoder to decode the message included in the set of frequencies received.

— A memory unit.

— A system for retrieving the information stored in the memory.

— A generator of telephone control operating frequencies.

— A system for displaying the information stored in the memory unit.

— A calling tone signal generator for the calling station and a current or signal generator to operate an indicator, such as the bell or loudspeaker of the called station subscriber set.

— A sytem of electronic switches to automatically isolate the receivers during the sending back of return signals and, in general, to isolate the operating block of the detector from the idle ones.

— An auxiliary circuit to allow completion of the call in those special cases where the calling station identification is not received because the corresponding telephone exchange cannot send the identification or it has been programmed not to send it.

The called station line where the detector is connected is characterised in that it has been designated at its local exchange with a special category or shunt and the telephone exchange system is characterised in that it has been programmed not only to change the regular sequence of call control signalling, but also to disengage automatically its control unit from the call process, which is passed over temporarily to the detector in those special cases where it receives a call addressed to a line equipped with a detector, but to operate normally in all other cases.

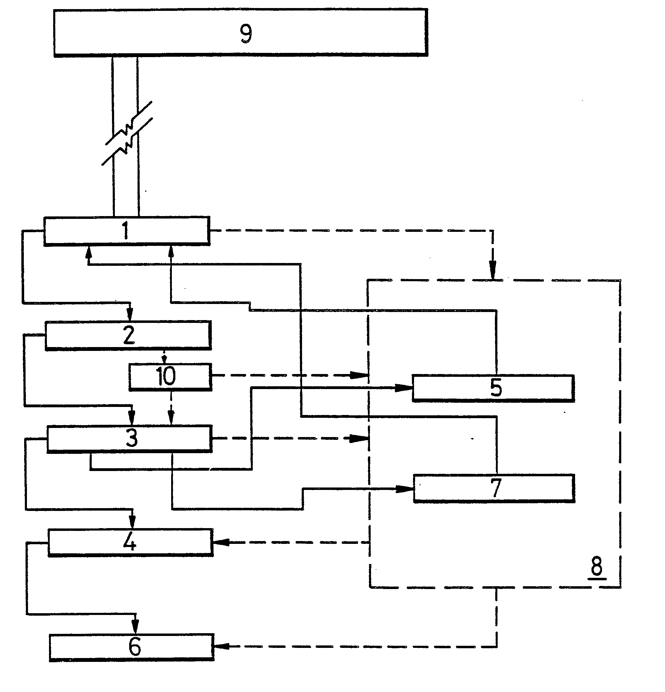

One embodiment of the invention will now be described by way of example with reference to Figure 1 which is a block diagram of a detector unit used in the system of the invention. Only the essential circuits are indicated, but without each one of them the detector unit will not work.

The telephone network is represented schematically by block 9 and is coupled to the detector by a double connecting line. The telephone network includes the switching exchanges and the subscriber set.

Auxiliary circuits without a basic function have been eliminated to simplify the drawing for the purpose of this description.

Connecting lines between blocks acting as signal paths have been indicated by continuous lines when they are fixed or by dotted lines when they are only temporarily established.

The control unit of the identification detector is represented by the frame outlined with a broken line 8. Only its basic blocks and connecting lines are represented. The receiving/transmitting lines between the control unit and the remaining blocks have been indicated as starting/ending at the control unit without additional detail, as the remaining circuits of the control unit are not relevant for the purpose of this description.

The identification detector is represented by the block diagram of Fig. 1. It is connected to the called station line, generally to the same terminals as the subscriber set, though this is not a necessary condition and the connection could be made at any point on the line from the local exchange up to the subscriber location. The detector is series or shunt-connected to the subscriber line depending on the final use of the detector, private or official. The telephone network including the subscriber set is represented by block 9.

The detector is supplied with power by way of a connection to the mains supply or it can have its own power source incorporated, such as batteries or accumulators. It is also possible to supply it with power directly from the local exchange, specially in those cases where the detector is incorporated in the subscriber set.

Referring to Fig. 1, block 1 represents an input sensor which senses the position of the subscriber set, that is, if the receiver is hung up or in use. When a call is made from the subscriber set this sensor 1 also isolates the detector from the subscriber line to eliminate any possibility of interference.

At the local exchange, any line where an identification detector is desired to be connected is designated with a special category or shunt, which allows the control unit of the exchange to differentiate those lines equipped with a detector from the rest. This special designation serves at the same time to eliminate the possibility of a detector being installed without the knowledge of the telephone operating company. If a detector is connected to a regular subscriber line it does not operate and neither is the line affected in any way.

When a call is received which is addressed to a subscriber line designated with a special category or shunt, that is, where a detector unit has been connected, the switching operations do not finish with the selection of the called line, as the exchange has been programmed to disengage its control unit from the calling process after sending a signal to the exchange where the call originated, requesting the category and identification number of the calling station. At the same time as the local exchange where the call is received disengages its control unit from the calling process, the calling tone and current for the caller and called party are not sent or are cancelled, depending on the particular type of exchange involved in the process, and the identification detector is connected directly with the exchange of origin. In other words, and using standard telephone terminology: the telephone exchanges of the network are programmed in such a way that when a call is received addressed to a called station designated with a special category or shunt, instead of sending a signal indicating that the called line has been localised, or located, and changed to a code containing information about the line situation (A—3 signal), for example whether it is free, engaged, inoperative or the like, the control unit of the exchange sends back a signal requesting the category and identification number of the calling part (A—5 signal), disengaging at the same time its control unit from the calling process without sending the tone and calling current for the caller and called party, or cancelling them, and connecting the detector directly with the exchange of origin.

If the calling and called parties belong to the same local exchange, the process is similar but the input and output control units now correspond with the same exchange.

The exchange of origin might be the local exchange of the calling party or an intermediate tandem exchange in special cases, for example, in international calls if two countries have no previous agreements to allow automatic call tracing, in the case of old type exchanges which are not prepared to send the calling station identification or in some other special cases.

During the whole process of calling station identification, there is no signalling present in the telephone network other than the standard telephone signalling, as the whole process does not respond to any strange signalling, but is based on the disengagement of the control unit of the receiving exchange and the transfer of the control process to the identification detector.

As a result of the signal received by the exchange of origin requesting the category and identification number of the calling station (signal A—5), its control unit sends in the first place the category of the calling line to the detector connected to the called station. This category is coupled to the frequency detection circuit 2, Fig. 1, where the frequencies are identified and then decoded by the decoder 3, recognising the number sent by the exchange of origin as the category of the calling line. Once this number has been identified and checked it is entered in the memory 4 and a new identification requesting signal is sent back (A—5 signal, in MF code generally called 2 in 5), but this time the signal comes from the frequency generators 5 of the identification detector and not from the control unit of the local exchange, which is not disengaged from the calling process. The signal sent confirms to the exchange of origin the receipt of the category and requests the first figure of the calling station number. From this moment on, the exchange of signals between the detector and the telephone exchange of origin continues according to CCITT recommendations existing at the time and concerning signalling between telehone exchanges. The identification detector receives each figure and returns an identification request signal (A—5) until all the figures identifying the calling station have been sent and received by the detector.

When the last figure is received, the detector sends a new A—5 signal which is answered by the exchange of origin with a new signal indicating the end of the identification number of the calling party (signal I—15). This signal is now answered by the detector with a signal indicating that the line has been localised and changes to another signal code containing information about the situation of the line (signal A—3 and code B). Simultaneously, the memory is blocked, as any further information that might be sent by the exchange of origin is not relevant for the identification of the calling station number.

The A—3 signal indicates to the exchange of origin that the call has now been processed and completed. It now sends again the category of the calling line and gets ready to receive the category of the called line. The identification detector, after receiving and identifying again the category of the calling line, sends back a signal indicating the situation of the line and the category of the called line (signal B). The control unit of the exchange of origin now accepts the call as completed and disengages itself, closing the conversation path and passing the control of the call to the junctor circuit which establishes the conversation path between the two subscribers, and sends the calling signal for the called subscriber and the rining signal for the calling subscriber. Moreover, the identification detector, after sending the last signal B, finishes the call control process and changes to the phase of reading the memory and transferring the information to a display panel, magnetic tape or similar system 6. It shows the category and identification number of the calling party and, at the same time, it sends through the line the calling tone for the caller and the call signal or current for the called party generator 7, which operates a loudspeaker or bell to advise the subscriber that a call has been received. When the call is answered, that is, when the receiver is picked up, sensor 1 sends a signal to its control unit 8 indicating that the call has been answered and this control unit 8 disconnects the generator of the "calling"/"called" signals of the detector.

If a display panel is used, it will be represented by block 6 and will be switched off when the receiver of the subscriber set is replaced. In all cases the information received, category, area code, country code, if applicable, and individual identification number of the calling station, is maintained in the memory 4, from where it can be retrieved at any moment and transferred again to the display, to a printer or to any other peripheral equipment that might be connected to the detector. It can also be erased from the memory upon receiving a new call to allow entry of the new number, as in the case of low priced units with limited memory capacity.

In certain types of telephone networks it might happen that the local exchange of the calling station will not send back the identity of the calling party. For example, in a country with several independent telephone operating companies, one of them might not adopt the system of calling line identification simultaneously with the rest. A similar situation may be encountered with international calls where the necessary agreements between countries might not have been made. Also, it could occur that some old exchanges might not be equipped to return the identity of the calling line. As the call must be processed and completed in all cases the invention provides alternatives:—

— The network of telephone exchanges is programmed in such a way that when a particular exchange does not send the identification number of the calling party, the detector receives a repeated figure, which, through the counter circuit 10 is accepted as the identification number of the calling party once a number of figures equivalent to those of a regular calling station is received.

— Alternatively, as also represented in Fig. 1 by block 10, the detector is internally programmed to complete a call upon receipt of a signal of an unidentified calling party (signal I—12).

From the previous description it can be clearly deduced that by designating a subscriber line with a special category or shunt it is possible to program a network of telephone exchanges in such a way that without using any other signalling than its own control signalling, the identity of a calling station can be sent to an identification detector connected to the receiving line.

No additional alternative routes are required, nor does any equipment need to be installed at the telephone exchanges. Moreover, the whole identification process is started automatically without requiring any special signals foreign to the network's own signalling to start the calling line identification process.

The invention is also based on the fact that the local exchange of the called station, upon sensing the special category or shunt with which the called station has been designated, is programmed to disengage its control unit from the calling process and to pass it over to the identification detector, which takes over the function of the end telephone exchange until the complete identification of the calling line has been received. The identification detector not only has the capacity to replace the operation of the end exchange, but is also composed of a set of complementary circuit blocks that allow it to receive and store the identification information, complete the call in those cases where the exchange of origin does not send the calling station identification, disengage itself from the called lined once the identification is completed and show the identification of the calling station received on a display or transfer it to a magnetic tape, or print it or use it in any other convenient way.

The ingenuity and simplicity of the invention described finally allows one to design and produce identification detectors of low price and small dimensions that can be integrated in the subscriber set as a standard feature.

Finally, the calling line tracing system and identification detector described can be applied to any kind of network composed of different types of telephone exchanges and without any limitation of distance between calling and called station, all of this being possible because the system according to the invention only operates with standard telephone signalling as per CCITT recommendations.

## Claims

1. A telephone network system comprising a plurality of telephone exchanges and including means for identifying a calling station to be connected by way of a telephone exchange to a called station provided with an identification detector device, the exchange being arranged to recognise a station provided with such a device and on receipt of a call for such a station to send a signal to the exchange where the call originated requesting through the detector device identification information of the calling station and then to transfer control of the call to the identification detector device, the detector device being arranged to receive the identification information and to control thereby the completion of the call from the calling station to the called station, characterised in that the detector device is located at the called station, the exchange itself is arranged to send out the request for the identification signals, and the set of telephone switching exchanges (9) of the network has been specially programmed to have:

means for disengaging the control unit (8) of the end telephone exchange of the called party upon receiving a call addressed to a called line designated with a special category or shunt and returning a signal requesting identification of the calling station instead of a signal indicating that the called line has been localised and changing to a code containing information about the state of the line reached,

means for stopping or cancelling the sending of calling tone for the caller and called signal or current for the called party,

means for transferring the control of the calling process from the control unit (8) of the end telephone exchange to the identification detector, which takes over the control of the calling process until the identification of the calling party is received and the call is completed, and

means whereby if the exchange of origin where the calling station is connected cannot send the identification of the calling line in response to the identification request signals of the detector, the corresponding tandem exchange has been specially arranged to send instead a repeated code figure which can be accepted by the detector as identification of the calling station, allowing the completion of the call, or alternatively,

means whereby if the exchange of origin where the calling station is connected sends a signal that the calling part is unidentified the detector, upon receiving this signal, is internally programmed to complete the call, showing in a display (6) or storing in its memory (4) a predetermined number as identification of the calling party, without any special arrangement in the intervening tandem exchanges, if existing, allowing it to complete the call.

2. A system as claimed in claim 1 wherein the identification process of the directory number of a calling station of a plurality of telephone stations connected through a telephone switching network (9) to a called station is started automatically if, and only if, the local telephone exchange where the called station is connected, upon receiving a call, senses an addressed telephone line which has been designated with a special category or shunt.

## Revendications

1. Un système de réseau téléphonique comprenant un ensemble d'autocommutateurs téléphoniques et comportant des moyens destinés à identifier un poste demandeur devant être connecté par l'intermédiaire d'un autocommutateur téléphonique à un poste demandé équipé d'un dispositif détecteur d'identification, l'autocommutateur étant conçu de façon à reconnaître un poste équipé d'un tel dispositif et à émettre, à la réception d'un appel pour un tel poste, un signal dirigé vers l'autocommutateur duquel provient l'appel, demandant par l'intermédiaire du dispositif détecteur une information d'identification du poste demandé, puis à transférer la commande de l'appel au dispositif détecteur d'identification, le dispositif détecteur étant conçu de façon à recevoir l'information d'identification et à commander ainsi l'établissement de la communication du poste demandeur vers le poste demandé, caractérisé en ce que le dispositif détecteur se trouve au poste demandé, l'autocommutateur lui-même est conçu de façon à émettre la demande des signaux d'identification, et l'ensemble des autocommutateurs téléphoniques (9) du réseau ont été spécialement programmés de façon à comporter:

des moyens destinés à faire en sorte que l'unité de commande (8) de l'autocommutateur téléphonique final du demandé abandonne le traitement de l'appel à la réception d'un appel adressé à une ligne demandée qui est désignée par une catégorie ou un shunt spécial, et à renvoyer un signal demandant l'identification du poste demandeur, au lieu d'un signal indiquant que la ligne demandée a été localisée, ce signal faisant place à un code contenant une information concernant l'état de la ligne obtenue,

des moyens destinés à arrêter ou à annuler l'émission de la tonalité d'appel pour le demandeur et du signal ou du courant d'appel pour le demandé,

des moyens destinés à transférer la commande du traitement de l'appel de l'unité de commande (8) de l'autocommutateur téléphonique final vers le détecteur d'identification, qui prend en charge la commande du traitement de l'appel jusqu'à ce que l'identification du demandeur soit reçue et que la communication soit établie, et

des moyens grâce auxquels si l'autocommutateur d'origine auquel le poste demandeur est connecté ne peut pas émettre l'identification de la ligne du poste demandeur en réponse aux signaux de demande d'identification du détecteur, l'autocommutateur associé correspondant est spécialement conçu de façon à émettre à la place un chiffre de code répété que le détecteur peur accepter en tant qu'identification du poste demandeur, ce qui permet l'établissement de la communication, ou bien,

des moyens grâce auxquels si l'autocommutateur d'origine auquel le poste demandeur est connecté émet un signal indiquant que le demandeur est non identifié, le détecteur est programmé de façon interne de manière à établir la communication à la réception de ce signal, en présentant dans un dispositif d'affichage (6) ou en enregistrant dans sa mémoire (4) un numéro prédéterminé en tant qu'identification du demandeur, sans qu'aucun dispositif spécial ne soit nécessaire dans les autocommutateurs associés intermédiaires, s'il y en a, pour permettre l'établissement de la commutation.

2. Un système selon la revendication 1, dans lequel le processus d'identification du numéro d'annulaire d'un poste demandeur parmi un ensemble de postes téléphoniques connectés un poste demandé par l'intermédiaire d'un réseau de commutation téléphonique (9), démarre automatiquement si, et seulement si, l'autocommutateur téléphonique local auquel le poste demandé est connecté détecte, au moment de la réception d'un appel, une ligne téléphonique adressée qui a été désignée par une catégorie ou un shunt spécial.

## Patentansprüche

1. Fernsprechnetzsystem, das eine Mehrzahl von Telefonämtern aufweist und Mittel zum Identifizieren einer anrufenden Stelle enthält, die über ein Telefonamt mit einer angerufenen Stelle zu verbinden ist, die mit einer Identifizierungsdetektoreinrichtung versehen ist, wobei das Amt eingerichtet ist, eine mit einer solchen Einrichtung versehene Stelle zu erkennen und bei Empfang eines Anrufes für eine solche Stelle an jenes Amt, von wo der Anruf herstammt, ein Signal zu senden, mit dem über die Detektoreinrichtung Identifizierungsinformation der anrufenden Stelle angefordert wird, und danach die Steuerung des Anrufes an die

Identifizierungsdetektoreinrichtung zu übergeben, wobei die Detektoreinrichtung eingerichtet ist, die

Identifizierungsinformation zu empfangen und dadurch die Herstellung der Verbindung von der anrufenden Stelle zur angerufenen Stelle zu steuern, dadurch gekennzeichnet, daß die Detektoreinrichtung bei der angerufenen Stelle angeordnet ist, das Amt selbst zur Aussendung der Anforderung der Identifizierungssignale eingerichtet ist, und die Apparatur der Fermsprechvermittlungen (9) des Netzes speziell pro-

grammiert ist, um:

Mittel zum Abschalten der Steuereinheit (8) des Endamtes des angerufenen Teilnehmers bei Empfang eines an eine angerufene Leitung, die mit einer speziellen Kategorie oder Abzweigung gekennzeichnet ist, adressierten Anrufes und Rücksenden eines die Identifizierung der anrufenden Stelle anfordernden Signals anstatt eines Signals, das angibt, daß die angerufene Leitung lokalisiert wurde, und zu einem Code wechselt, der Information über den Zustand der erreichten Leitung enthält,

Mittel zum Anhalten oder Annullieren des Sendens eines Ruftones für den Anrufer und eines Anrufsignals oder Stromes für den angerufenen Teilnehmer,

Mittel zur übergabe der Steuerung des Anrufvorganges von der Steuereinheit (8) des Endamtes zum Identifizierungsdetektor, welcher die Steuerung des Anrufvorganges übernimmt, bis die Identifizierung des anrufenden Teilnehmers empfangen wird und die Verbindung hergestellt ist, und

Mittel, durch die das entsprechende Durchgangsamt, wenn das Anfangsamt, an das die anrufende Stelle angeschlossen ist, nicht die Identifizierung der rufenden Leitung als Antwort auf die

Identifizierungsanforderungssignale des Detektors senden kann, speziell eingerichtet ist, anstattdessen eine wiederholte Codeziffer zu senden, die vom Detektor als Identifizierung der anrufenden Stelle akzeptiert werden kann, was die Herstellung der Verbindung erlaubt, oder alternativ

Mittel aufzuweisen, durch die der Detektor, wenn das Anfangsamt, an das die anrufende Stelle angeschlossen ist, ein Signal sendet, daß der anrufende Teilnehmer nicht identifiziert ist, bei Empfang dieses Signals intern programmiert ist, die Verbindung herzustellen, wobei eine vorherbestimmte Nummer als Identifizierung des anrufenden Teilnehmers in einem Anzeigegerät (6) gezeigt oder in seinem Speicher gespeichert wird, ohne daß irgendeine besondere Einrichtung in den dazwischenliegenden Durchgangsämtern, falls vorhanden, die Herstellung der Verbindung ermöglicht.

2. System nach Anspruch 1, bei dem der Identifizierungsvorgang der Rufnummer einer anrufenden Stelle aus einer Mehrzahl von Fernsprechstellen, die über ein Fernsprechwählnetz (9) mit einer gerúfenen Stelle verbunden sind, dann, und nur dann, automatisch gestartet wird, wenn das örtliche Telefonamt, an das die angerufene Stelle angeschlossen ist, beim Empfang eines Anrufes eine adressierte Telefonleitung erfaßt, die mit einer speziellen Kategorie oder Abzweigung gekennzeichnet, ist.